(19) Europäisches Patentamt
European Patent Office
Office européen des brevets

(11) **EP 2 559 742 A1**

(12) **EUROPEAN PATENT APPLICATION**
published in accordance with Art. 153(4) EPC

(43) Date of publication:
**20.02.2013 Bulletin 2013/08**

(51) Int Cl.:
*C09D 127/18* [(2006.01)]    *C09D 123/08* [(2006.01)]

(21) Application number: **10849868.4**

(22) Date of filing: **21.12.2010**

(86) International application number:
**PCT/JP2010/073033**

(87) International publication number:
**WO 2011/129032 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2010 JP 2010095255**

(71) Applicant: **Asahi Glass Company, Limited**
**Tokyo 100-8405 (JP)**

(72) Inventors:
• **NAKANO, Takashi**
**Tokyo 100-8405 (JP)**

• **FUJITA, Tomoyuki**
**Tokyo 100-8405 (JP)**
• **YAMAMOTO. Hiroshi**
**Tokyo 100-8405 (JP)**
• **MORIZAWA, Yoshitomi**
**Tokyo 100-8405 (JP)**
• **SHIROTA, Naoko**
**Tokyo 100-8405 (JP)**

(74) Representative: **Müller-Boré & Partner**
**Patentanwälte**
**Grafinger Straße 2**
**81671 München (DE)**

(54) **COATING COMPOSITION AND PRODUCTION METHOD FOR SAME, AND FORMATION METHOD FOR COATING FILM USING SAME**

(57)    To provide a coating composition containing a fluorinated copolymer having repeating units derived from ethylene and tetrafluoroethylene, which can be formed into a coating film by coating and which can be produced at a relatively low temperature, and a process for its production, and a process for forming a coating film of the fluorinated copolymer by using this composition, which can be carried out at a relatively low temperature. A coating composition comprising microparticles of a fluorinated copolymer (ETFE) having repeating units derived from ethylene and repeating units derived from tetrafluoroethylene, and a solvent capable of dissolving ETFE at a temperature of not higher than the melting point of ETFE, wherein the microparticles of ETFE are microparticles precipitated from a solution having ETFE dissolved in the solvent, and are dispersed in the solvent.

Fig. 1

300000 : 1          100 nm

EP 2 559 742 A1

**Description**

TECHNICAL FIELD

The present invention relates to a coating composition, a process for its production, and a process for forming a coating film by using the coating composition.

BACKGROUND ART

Fluororesins are excellent in solvent resistance, low dielectric constant, low surface energy, non-tackiness, weather resistance, etc. and therefore are used for various applications for which common plastics may not be useful. Among them, an ethylene/tetrafluoroethylene copolymer (hereinafter referred to also as ETFE) is excellent in heat resistance, flame retardancy, chemical resistance, weather resistance, low frictional properties, low dielectric constant properties, transparency, etc. and therefore is used in a wide range of fields including covering material for heat resistance wires, corrosion resistant piping for chemical plants, material for plastic greenhouses for agriculture, mold release films, etc.

However, ETFE is usually insoluble in a solvent and cannot be applied in the form of a solution to form a coating film. Therefore, the forming method for ETFE has been limited to a method for molding by thermal fusion of ETFE, such as extrusion molding, injection molding or powder coating, except for a special case as disclosed in the following Patent Document.

As a method for forming an ETFE coating film on a substrate, a totally melt molding method or an electrostatic powder coating of ETFE powder is, for example, known. However, these methods require special apparatus. Further, in order to form a coating film which is firmly attached to the substrate and has sufficient physical properties without pinholes, it has been necessary to melt and mold ETFE as mentioned above i.e. to heat it at a temperature of at least the melting point of ETFE. Therefore, it has been difficult to form an ETFE coating film on a substrate which undergoes deformation at a temperature of not higher than the melting point of ETFE.

On the other hand, some attempts to obtain a solution of ETFE have been reported. For example, according to Patent Documents 1, 2 and 3, a compound having a high boiling point such as diisobutyl adipate and ETFE are stirred at a temperature as high as at least 230°C to dissolve ETFE and then cooled while being more vigorously stirred to obtain an ETFE suspension. Then, ETFE is separated by filtration and further dispersed in a mixed solvent of kerosene and diisobutyl adipate to obtain an ETFE dispersion. It is disclosed that such a dispersion is applied to a copper wire to form a coating film at a temperature as high as 450°C. However, this method requires a cumbersome operation for preparation of the ETFE suspension and requires a step of high temperature treatment in order to obtain an ETFE-covered electric wire having sufficient physical properties.

As another example, an attempt to obtain an ETFE solution by using, as a solvent, an oil of a chlorotrifluoroethylene oligomer having a low molecular weight, has been reported (Patent Document 4). However, such an oil has a high boiling point and can hardly be dried, and it is not easy to employ such an oil for the formation of an ETFE coating film. Further, the ETFE dispersion obtained by using such an oil, has no fluidity at a temperature in the vicinity of room temperature and cannot be applied to the formation of a coating film.

Thus, the conventional attempts to form a coating film of ETFE can hardly be said to be readily practically useful for carrying out the practical operation, and no method has been known whereby a coating film of ETFE can be formed at a relatively low temperature by an easy operation.

PRIOR ART DOCUMENTS

PATENT DOCUMENTS

Patent Document 1:   US Patent No. 2,412,960
Patent Document 2:   US Patent No. 2,448,952
Patent Document 3:   US Patent No. 2,484,483
Patent Document 4:   US Patent No. 4,933,388

DISCLOSURE OF INVENTION

TECHNICAL PROBLEM

The present invention has been made in view of the above situation, and it is an object of the present invention to provide a coating composition containing a fluorinated copolymer having repeating units derived from ethylene and repeating units derived from tetrafluoroethylene, which can be formed into a coating film by coating and which can be produced at a relatively low temperature, and a process for its production, and a process for forming a coating film of the fluorinated copolymer by using such a coating composition, which can be carried out at a relatively low temperature.

SOLUTION TO PROBLEM

The present invention provides a coating composition and a process for its production, and a process for forming a coating film of the fluorinated copolymer by using such a composition, having the following constructions.

[1] A coating composition comprising microparticles of a fluorinated copolymer having repeating units derived from ethylene and repeating units derived from tetrafluoroethylene, and a solvent capable of dissolving the fluorinated copolymer at a temperature of not higher than the melting point of the fluorinated copolymer, wherein the microparticles of the fluorinated copolymer are microparticles precipitated from a solution having the fluorinated copolymer dissolved in the solvent, and are dispersed in the solvent.

[2] The coating composition according to [1], wherein the solvent has a boiling point of at least 40°C and at most 210°C.

[3] The coating composition according to [1] or [2], wherein, of the solvent, the dissolution index (R) for the fluorinated copolymer, based on Hansen solubility parameters and represented by the following formula (1), is less than 25:

$$R=4\times(\delta d-15.7)^2+(\delta p-5.7)^2+(\delta h-4.3)^2 \qquad (1)$$

wherein $\delta d$, $\delta p$ and $\delta h$ represent the dispersion component, the polar component and the hydrogen bonding component, respectively, in Hansen solubility parameters, and their units are $(MPa)^{1/2}$, respectively.

[4] The coating composition according to any one of [1] to [3], wherein the proportion of repeating units derived from comonomers other than tetrafluoroethylene and ethylene constituting the fluorinated copolymer, is from 0.1 to 50 mol% in all monomer repeating units.

[5] The coating composition according to any one of [1] to [4], wherein the fluorinated copolymer is a fluorinated copolymer having at least one member selected from the group consisting of a carboxylic acid group, an acid anhydride group and a carboxylic halide group.

[6] The coating composition according to any one of [1] to [5], wherein the microparticles of the fluorinated copolymer have an average particle size within a range of from 0.005 to 2 $\mu$m as an average particle size measured by a small-angle X-ray scattering technique at 20°C.

[7] A process for producing a coating composition, which comprises a step of dissolving a fluorinated copolymer having repeating units derived from ethylene and repeating units derived from tetrafluoroethylene, in a solvent capable of dissolving the fluorinated copolymer at a temperature of not higher than the melting point of the fluorinated copolymer, to form a solution, and a step of precipitating the fluorinated copolymer in the form of microparticles in the solvent in the solution, to convert the solution to a dispersion having the microparticles dispersed in the solvent.

[8] The process for producing a coating composition according to [7], wherein the dissolution is carried out at a temperature of at least 40°C and not higher than the melting point of the fluorinated copolymer, and the precipitation is carried out by cooling.

[9] A process for forming a coating film, which comprises a composition-applying step of applying the coating composition as defined in any one of [1] to [6] to a substrate to form a solvent-containing coating film, and a solvent-removing step of removing the solvent from the solvent-containing coating film to obtain a coating film containing no solvent.

[10] The process for forming a coating film according to [9], wherein in the composition-applying step, the application of the coating composition to the substrate is carried out at a temperature of lower than the temperature for dissolving the fluorinated copolymer in the solvent.

[11] The process for forming a coating film according to [9] or [10], wherein in the solvent-removing step, the removal of the solvent is carried out at a temperature of from 0 to 350°C.

ADVANTAGEOUS EFFECTS OF INVENTION

According to the present invention, it is possible to produce, at a relatively low temperature, a coating composition containing a fluorinated copolymer having repeating units derived from ethylene and repeating units derived from tetrafluoroethylene. Further, by using the coating composition of the present invention, it is possible to form a uniform coating film by a simple process of coating and drying at a relatively low temperature.

BRIEF DESCRIPTION OF DRAWINGS

Fig. 1 is a transmission electron microscopic (TEM) photograph (300,000 magnifications) of ETFE microparticles contained in the coating composition of the present invention prepared in Example 1.
Fig. 2 is an optical microscopic photograph (50 magnifications) of the surface of an ETFE coating film obtained by the coating composition of the present invention prepared in Example 1.
Fig. 3 is an optical microscopic photograph (50 magnifications) of the surface of an ETFE coating film obtained by the coating composition prepared in Comparative Example 1.

DESCRIPTION OF EMBODIMENTS

Now, embodiments of the present invention will be described in detail.

[Coating composition]

The coating composition of the present invention is a coating composition comprising microparticles of a fluorinated copolymer having repeating units derived from ethylene and repeating units derived from tetrafluoroethylene, and a solvent capable of dissolving the fluorinated copolymer at a temperature of not higher than the melting point of the fluorinated copolymer, wherein the microparticles of the fluorinated copolymer are microparticles precipitated from a solution having the fluorinated copolymer dissolved in the solvent, and are dispersed in the solvent.

Here, in the coating composition of the present invention, the above "dispersed" is meant for a state under ordinary temperature (5°C to 40°C) and ordinary pressure (0.1 MPa) conditions. That is, the coating composition of the present invention has a dissolution temperature at a temperature of at least ordinary temperature and at most the melting point of the fluorinated copolymer, and it is a composition in a solution state at a temperature of at least the dissolution temperature and a composition in a dispersion state at ordinary temperature under ordinary pressure.

(1) Fluorinated copolymer

The fluorinated copolymer in the coating composition of the present invention is not particularly limited so long as it is a fluorinated copolymer containing repeating units derived from ethylene and repeating units derived from tetrafluoroethylene. An example of such a fluorinated copolymer may specifically be ETFE containing repeating units derived from ethylene and repeating units derived from tetrafluoroethylene ($CF_2=CF_2$:TFE), as the main repeating units in the copolymer. Here, in this specification, the term "ETFE" is one to be used as a general term for a fluorinated copolymer containing TFE and ethylene as the main repeating units in the copolymer, which may contain repeating units based on comonomers other than TFE and ethylene, as constituting units of the copolymer.

In the present invention, ETFE may be one wherein the molar ratio of repeating units derived from TFE/repeating units derived from ethylene is preferably from 70/30 to 30/70, more preferably from 65/35 to 40/60, most preferably from 65/35 to 45/55.

Further, ETFE in the present invention preferably contains, in addition to TFE and ethylene, repeating units derived from a comonomer other than TFE and ethylene, in order to have various functions imparted to the obtained copolymer. Such a comonomer may, for example, be a fluoroethylene (provided that TFE is excluded) such as $CF_2=CFCl$ or $CF_2=CH_2$; a fluoropropylene such as $CF_2=CFCF_3$, $CF_2=CHCF_3$ or $CH_2=CHCF_3$; a (polyfluoroalkyl)ethylene having a $C_{2-12}$ fluoroalkyl group, such as $CF_3CF_2CH=CH_2$, $CF_3CF_2CF_2CF_2CH=CH_2$, $CF3CF_2CF_2CF_2CF=CH_2$ or $CF_2HCF_2CF_2CF=CH_2$; a perfluorovinyl ether such as $R^f(OCFXCF_2)_mOCF=CF_2$ (wherein $R^f$ is a $C_{1-6}$ perfluoroalkyl group, X is a fluorine atom or a trifluoromethyl group, and m is an integer of from 0 to 5); a perfluorovinyl ether having a group which can easily be converted to a carboxylic acid group or a sulfonic acid group, such as $CH_3OC(=O)CF_2CF_2CF_2OCF=CF_2$ or $CSO_2CF_2CF_2OCF(CF_3)CF_2OCF=CF_2$; an olefin (provided that ethylene is excluded), such as a $C_3$ olefin having three carbon atoms such as propylene, a $C_4$ olefin having four carbon atoms such as butylene or isobutylene, 4-methyl-1-pentene, cyclohexene, styrene, or $\alpha$-methylstyrene; a vinyl ester, such as vinyl acetate, vinyl lactate, vinyl butyrate, vinyl pivalate, or vinyl benzoate, an allyl ester such as allyl acetate; a vinyl ether such as methyl vinyl ether, ethyl vinyl ether, butyl vinyl ether, isobutyl vinyl ether, tert-butyl-vinyl ether, cyclohexyl vinyl ether, 2-hydroxyethyl vinyl ether, 4-hydroxybutyl vinyl ether, polyoxyethylene vinyl ether, 2-aminoethyl vinyl ether, or glycidyl vinyl ether; a (meth)acrylic acid ester such as methyl (meth)acrylate, ethyl (meth)acrylate, n-butyl (meth)acrylate, isobutyl (meth) acrylate, cyclohexyl (meth)acrylate, 2-hydroxyethyl (meth)acrylate, 4-hydroxybutyl (meth)acrylate, 2-aminoethyl (meth) acrylate, glycidyl (meth)acrylate, 2-isocyanate ethyl (meth)acrylate, 3-(trimethoxysilyl)propyl (meth)acrylate, or 3-(triethoxysilyl)propyl (meth)acrylate; a (meth)acrylamide, such as (meth)acrylamide, N-methyl (meth)acrylamide, or N,N-dimethyl (meth)acrylamide; a cyano group-containing monomer such as acrylonitrile; a diene such as isoprene or 1,3-butadiene; a chloroolefin such as vinyl chloride or vinylidene chloride; a vinyl compound containing a carboxylic anhydride such as maleic anhydride, itaconic anhydride, citraconic anhydride or 5-norbornene-2,3-dicarboxylic anhydride. These comonomers may be used alone or in combination as a mixture of two or more of them.

In a case where ETFE contains such repeating units derived from comonomers other than TFE and ethylene, the proportion of their content is preferably from 0.1 to 50 mol%, more preferably from 0.1 to 30 mol%, most preferably from 0.1 to 20 mol%, in all monomer repeating units of ETFE. In ETFE to be used for the coating composition of the present invention, when the content of repeating units derived from comonomers other than TFE and ethylene is within this range, it becomes possible to impart functions such as high solubility, water repellency, oil repellency, crosslinking properties, adhesion to the substrate, etc. without impairing the properties of ETFE constituted substantially solely by TFE and ethylene.

Further, from the viewpoint of the adhesive property to a substrate, ETFE to be used for the coating composition of the present invention preferably has, in its molecular structure, a functional group having an adhesive property to the substrate. Such a functional group may be located at a molecular terminal of ETFE or in a side chain or the main chain of ETFE. Further, such functional groups may be used as of one type alone or as of two or more types in combination in ETFE. The type and content of the functional group having an adhesive property to the substrate are suitably selected depending upon the type, shape or application of the substrate to be coated with the coating composition, the required adhesive property, the bonding method, the method for introducing the functional group, etc.

The functional group having an adhesive property to the substrate may specifically be at least one member selected from the group consisting of a carboxylic acid group, a residue (hereinafter referred to as an acid anhydride group) obtained by dehydration condensation of two carboxy groups in one molecule, a hydroxy group, a sulfonic acid group, an epoxy group, a cyano group, a carbonate group, an isocyanate group, an ester group, an amido group, an aldehyde group, an amino group, a hydrolysable silyl group, a carbon-carbon double bond, an ether group and a carboxylic halide group (-COX, wherein X is fluorine, chlorine, bromine or iodine).

The above carboxylic acid group means a carboxy group and its salt (-COOM$^1$, wherein M$^1$ is a metal atom or atomic group capable of forming a salt with a carboxylic acid), and the sulfonic acid group means a sulfo group and its salt (SO$_3$M$^2$, wherein M$^2$ is a metal atom or atomic group capable of forming a salt with sulfonic acid). Among the above functional groups, at least one member is particularly preferred which is selected from the group consisting of a carboxylic acid group, an acid anhydride group, a hydroxy group, an epoxy group, a carbonate group, a hydrolysable silyl group, a carbon-carbon double bond and a carboxylic halide group. Most preferred is at least one member selected from the group consisting of a carboxylic acid group, an acid anhydride group and a carboxylic halide group. Such functional groups may be present in two or more different types in one molecule of the fluorinated copolymer, or two or more in number in one molecule.

The method for introducing a functional group having an adhesive property (hereinafter referred to also as "an adhesive functional group") to ETFE may, for example, be (i) a method wherein at the time of polymerizing ETFE, a copolymerizable monomer having an adhesive functional group is copolymerized together with other starting material monomers, (ii) a method wherein by a polymerization initiator, a chain extender, etc. an adhesive functional group is introduced to a molecular terminal of ETFE at the time of polymerization, or (iii) a method wherein a compound (graft compound) having an adhesive functional group and a functional group which can be grafted, is grafted to ETFE. These introducing methods may be used alone or in combination as the case requires. In consideration of the durability, ETFE which is produced by the method (i) and/or the method (ii) is preferred, and in view of the production conditions as disclosed in JP-A-2004-238405, ETFE which is produced by the method (i) is more preferred.

Further, also with respect to functional groups having various functions to be introduced as the case requires in addition to the above adhesive functional group, it is possible to introduce them to ETFE by the same methods as introducing the above adhesive functional group.

In the coating composition of the present invention, as the fluorinated copolymer having repeating units derived from ethylene and repeating units derived from TFE, it is possible to employ one obtained by copolymerizing ethylene and TFE as monomers essential for the preparation of the fluorinated copolymer and optional comonomers by a usual method, but it is also possible to employ a commercial product. Such fluorinated copolymers i.e. commercial products of ETFE may, for example, be specifically, Fluon (registered trademark) ETFE Series, Fluon (registered trademark) LM-ETFE Series and Fluon (registered trademark) LM-ETFE AH Series, manufactured by Asahi Glass Company, Limited, Neoflon (registered trademark), manufactured by Daikin Industries, Ltd., Dyneon (registered trademark) ETFE, manufactured by Dyneon, Tefzel (registered trademark), manufactured by DuPont, etc.

It is possible to incorporate one of these fluorinated copolymers alone or two or more of them in combination, to the coating composition of the present invention. In the coating composition of the present invention, the fluorinated copolymer is present in a state dispersed as microparticles in a solvent which will be described later. Here, the microparticles of the fluorinated copolymer are microparticles precipitated from a solution having the fluorinated copolymer dissolved in a solvent which will be described later. In the present invention, the average particle size of the microparticles of the fluorinated copolymer is preferably from 0.005 to 2 $\mu$m, more preferably from 0.005 to 1 $\mu$m, most preferably from 0.01 to 0.5 $\mu$m, as an average particle size measured by a small-angle X-ray scattering technique at 20°C. When the average particle size of the microparticles of the fluorinated copolymer in the coating composition of the present invention is within the above range, it is possible to form a coating film which is uniform and which is excellent in transparency, planarity and adhesion. In this specification, the average particle size means an average primary particle size unless otherwise specified.

Further, the content of the fluorinated copolymer in the coating composition of the present invention may be suitably changed depending upon the film thickness of the desired molded product. From the viewpoint of the moldability, the content of the fluorinated copolymer is preferably from 0.05 to 40 mass%, more preferably from 0.1 to 30 mass%, based on the total amount of the composition. When the content is within this range, it is possible to form a uniform coating film made of the fluorinated copolymer excellent in handling efficiency such as the viscosity, drying rate, uniformity of the film, etc.

(2) Solvent

The coating composition of the present invention contains a solvent together with the microparticles of the fluorinated copolymer. The solvent to be used in the coating composition of the present invention is a solvent capable of dissolving the fluorinated copolymer at a temperature of not higher than the melting point of the fluorinated copolymer and further is such a solvent that when microparticles of the fluorinated copolymer are precipitated from a solution having the fluorinated copolymer dissolved in the solvent, it is capable of permitting the microparticles to be present in a dispersed state at least at ordinary temperature under ordinary pressure.

As the solvent in the present invention, various solvents may be mentioned within the range satisfying the above conditions. Here, for a solvent to be used to satisfy the above conditions, the polarity of the solvent is preferably within a specific range. In the present invention, the following method is employed wherein a solvent which satisfies the above conditions is selected as a solvent having a polarity within a certain specific range, based on Hansen solubility parameters.

Hansen solubility parameters are ones such that the solubility parameter introduced by Hildebrand is divided into three components of dispersion component $\delta$d, polar component $\delta$p and hydrogen bonding component $\delta$h and represented in a three dimensional space. The dispersion component $\delta$d represents the effect by dispersion force, the polar component $\delta$p represents the effect by dipolar intermolecular force, and the hydrogen bonding component $\delta$h represents the effect by hydrogen bonding force.

The definition and calculation of Hansen solubility parameters are disclosed in "Hansen Solubility Parameter: A Users Handbook (CRC Press, 2007)", edited by Charles M. Hansen. Further, by using a computer software "Hansen Solubility Parameters in Practice (HSPiP)", also with respect to solvents, on which known parameter values, etc. are known in literatures, Hansen solubility parameters can be estimated simply from their chemical structures. With respect to the solvent in the present invention, a solvent to be used is to be selected by using HSPiP version 3 by employing, with respect to a solvent registered in the database, its values and employing, with respect to a solvent not registered, its estimated values.

Usually, Hansen solubility parameters for a certain polymer can be determined by a solubility test wherein samples of such a polymer are dissolved in many different solvents, on which Hansen solubility parameters have already been known, and the solubilities are measured. Specifically, such a sphere (solubility sphere) is to be found out whereby all three dimensional points of the solvents which dissolved the polymer among the solvents used for the above solubility test are included inside of the sphere, and points of the solvents which did not dissolve the polymer are located outside the sphere, and the central coordinate of such a sphere is taken as Hansen solubility parameters of the polymer.

Here, in a case where Hansen solubility parameters of another solvent not used for the measurement of Hansen solubility parameters of the above polymer are ($\delta$d, $\delta$p, $\delta$h), if the point represented by such coordinates is included inside of the solubility sphere of the above polymer, such a solvent is considered to dissolve the above polymer. On the other hand, if such a coordinate point is located outside of the solubility sphere of the above polymer, such a solvent is considered not to be able to dissolve the above polymer.

In the present invention, by utilizing the above Hansen solubility parameters, it is possible to use, as preferred solvents, a group of solvents which are solvents capable of dissolving the fluorinated copolymer contained in the coating composition, at a temperature of not higher than its melting point and which are in a certain distance from coordinates (15.7, 5.7, 4.3) being Hansen solubility parameters of diisopropyl ketone as the most suitable standard solvent to disperse the fluorinated copolymer in the form of microparticles at room temperature.

That is, the value R based on Hansen solubility parameters and represented by the following formula (1) is used as the dissolution index for the fluorinated copolymer i.e. ETFE.

$$R = 4 \times (\delta d - 15.7)^2 + (\delta p - 5.7)^2 + (\delta h - 4.3)^2 \qquad (1)$$

wherein $\delta d$, $\delta p$ and $\delta h$ represent the dispersion component, the polar component and the hydrogen bonding component, respectively, in Hansen solubility parameters, and their units are $(MPa)^{1/2}$, respectively.

Of the solvent in the present invention, the dissolution index (R) calculated by the above formula (1) by using Hansen solubility parameter coordinates ($\delta d$, $\delta p$, $\delta h$) of the solvent, is preferably less than 25, more preferably less than 16, most preferably less than 9. A solvent having Hansen solubility parameters whereby R represented by the above formula (1) falls within this range, has high affinity to the fluorinated copolymer and presents high solubility and dispersability of the microparticles.

Further, the solvent in the present invention may be a solvent composed of one compound or a solvent mixture composed of two or more compounds, and the value R calculated by the above formula (1) based on Hansen solubility parameters can be used as the dissolution index for the fluorinated copolymer. For example, in a case where a solvent mixture is used, average Hansen solubility parameters are obtained by a mixing ratio (volume ratio) of solvents to be used, and the above dissolution index (R) can be calculated by using them as Hansen solubility parameters.

Further, in the present invention, the boiling point of the solvent is preferably at most 210°C, more preferably at most 200°C, most preferably at most 180°C, from the viewpoint of the handling efficiency and removability of the solvent after the application. On the other hand, if the boiling point of the solvent is too low, there is, for example, a problem such that bubbles are likely to be formed at the time of removal by evaporation (hereinafter referred to also as drying) of the solvent after coating the composition, and therefore, it is preferably at least 40°C, more preferably at least 55°C, particularly preferably at least 80°C.

As the solvent which satisfies the above conditions, preferred may, for example, be a $C_{3-10}$ ketone, ester, carbonate or ether, and more preferred may, for example, be a $C_{5-9}$ ketone or ester. Specific examples include, for example, methyl ethyl ketone, 2-pentanone, methyl isopropyl ketone, 2-hexanone, methyl isobutyl ketone, pinacoline, 2-heptanone, 4-heptanone, diisopropyl ketone, isoamyl methyl ketone, 2-octanone, 2-nonanone, diisobutyl ketone, 2-methylcyclohexanone, 3-methylcyclohexanone, 4-ethylcyclohexanone, 2,6-dimethylcyclohexanone, 3,3,5-trimethylcyclohexanone, isophorone, (-)-fenchone, ethyl formate, propyl formate, isopropyl formate, butyl formate, isobutyl formate, sec-butyl formate, t-butyl formate, amyl formate, isoamyl formate, hexyl formate, cyclohexyl formate, heptyl formate, octyl formate, 2-ethylhexyl formate, methyl acetate, ethyl acetate, propyl acetate, isopropyl acetate, butyl acetate, acetate, sec-butyl acetate, t-butyl acetate, amyl acetate, isoamyl acetate, hexyl acetate, cyclohexyl acetate, heptyl acetate, octyl acetate, 2-ethylhexyl acetate, 2,2,2-trifluoroethyl acetate, 2,2,3,3-tetrafluoropropyl acetate, 1,1,1,3,3,3-hexafluoro-2-propyl acetate, 2,2-bis(trifluoromethyl)propyl acetate, 2,2,3,4,4,4-hexafluorobutyl acetate, 2,2,3,3,4,4,5,5-octafluoropentyl acetate, 3,3,4,4,5,5,6,6,6-nonafluorohexyl acetate, 4,4,5,5,6,6,7,7,7-nonafluoroheptyl acetate, 7,7,8,8,8-pentafluorooctyl acetate, methyl propionate, ethyl propionate, propyl propionate, isopropyl propionate, butyl propionate, isobutyl propionate, sec-butyl propionate, t-butyl propionate, amyl propionate, isoamyl propionate, hexyl propionate, cyclohexyl propionate, heptyl propionate, methyl butyrate, ethyl butyrate, propyl butyrate, isopropyl butyrate, butyl butyrate, isobutyl butyrate, sec-butyl butyrate, t-butyl butyrate, amyl butyrate, isoamyl butyrate, hexyl butyrate, cyclohexyl butyrate, methyl isobutyrate, ethyl isobutyrate, propyl isobutyrate, isopropyl isobutyrate, butyl isobutyrate, isobutyl isobutyrate, sec-butyl isobutyrate, t-butyl isobutyrate, amyl isobutyrate, isoamyl isobutyrate, hexyl isobutyrate, cyclohexyl isobutyrate, methyl valerate, ethyl valerate, propyl valerate, isopropyl valerate, butyl valerate, isobutyl valerate, sec-butyl valerate, t-butyl valerate, amyl valerate, isoamyl valerate, methyl isovalerate, ethyl isovalerate, propyl isovalerate, isopropyl isovalerate, butyl isovalerate, isobutyl isovalerate, sec-butyl isovalerate, t-butyl isovalerate, amyl isovalerate, isoamyl isovalerate, methylhexanoate, ethyl hexanoate, propyl hexanoate, isopropyl hexanoate, butyl hexanoate, isobutyl hexanoate, sec-butyl hexanoate, t-butyl hexanoate, methyl heptanoate, ethyl heptanoate, propyl heptanoate, isopropyl heptanoate, methyl octanoate, ethyl octanoate, methyl nonanate, methyl cyclohexane carboxylate, ethyl cyclohexane carboxylate, propyl cyclohexane carboxylate, isopropyl cyclohexane carboxylate, 2,2,2-trifluoroethyl cyclohexane carboxylate, bis(2,2,2-trifluoroethyl) succinate, bis(2,2,2-trifluoroethyl)glutarate, ethyl trifluoroacetate, propyl trifluoroacetate, isopropyl trifluoroacetate, butyl trifluoroacetate, isobutyl trifluoroacetate, sec-butyl trifluoroacetate, t-butyl trifluoroacetate, amyl trifluoroacetate, isoamyl trifluoroacetate, hexyl trifluoroacetate, heptyl trifluoroacetate, octyl trifluoroacetate, 2-ethylhexyl trifluoroacetate, methyl difluoroacetate, ethyl difluoroacetate, 2-propoxyethyl acetate, 2-butoxyethyl acetate, 2-pentyloxyethyl acetate, 2-hexyloxyethyl acetate, 1-ethoxy-2-acetoxypropane, 1-propoxy-2-acetoxypropane, 1-butoxy-2-acetoxypropane, 1-pentyloxy-2-acetoxypropane, 3-methoxybutyl acetate, 3-ethoxybutyl acetate, 3-propoxybutyl acetate, 3-butoxybutyl acetate, 3-methoxy-3-methylbutyl acetate, 3-ethoxy-3-methylbutyl acetate, 3-propoxy-3-methylbutyl acetate, 4-methoxybutyl acetate, 4-ethoxybutyl acetate, 4-propoxybutyl acetate, 4-butoxybutyl acetate, methyl pentafluorobenzoate, ethyl pentafluorobenzoate, methyl 3-(trifluoromethyl)benzoate, methyl 3,5-bis(trifluoromethyl)benzoate, 2,2,2-trifluoroethyl benzoate, 2,2,3,3-tetrafluoropropyl benzoate, 2,2,3,3,3-pentafluoropropyl benzoate, 1,1,1,3,3,3-hexafluoro-2-propyl benzoate, 2,2-bis(trifluoromethyl)propyl benzoate, 2,2,3,3,4,4,4-heptafluorobutyl benzoate, 2,2,3,3,4,4-hexafluorobutyl benzoate, 2,2,3,3,4,4,5,5,5-nonafluoropentyl benzoate, ethyl methyl carbonate, diethyl carbonate, dipropyl carbonate, dibutyl carbonate, bis(2,2,2-trifluoroethyl) carbonate, bis(2,2,3,3-tetrafluoropropyl) carbonate, tetrahydrofuran, pentafluoroanisole, and 3,5-bis(trifluoromethyl)anisole. Here, each of these solvents is a solvent wherein R calculated from the above formula (1) is less than 25.

Among them, the following compounds may be exemplified specifically as more preferred compounds as the solvent of the present invention.

Methyl ethyl ketone, 2-pentanone, methyl isopropyl ketone, 2-hexanone, methyl isobutyl ketone, pinacoline, 2-heptanone, 4-heptanone, diisopropyl ketone, isoamyl methyl ketone, 2-octanone, 2-nonanone, diisobutyl ketone, 4-ethyl cyclohexanone, 3,3,5-trimethylcyclohexanone, isophorone, isopropyl formate, isobutyl formate, sec-butyl formate, t-butyl formate, amyl formate, isoamyl formate, hexyl formate, heptyl formate, octyl formate, 2-ethylhexyl formate, methyl acetate, ethyl acetate, propyl acetate, butyl acetate, isobutyl acetate, amyl acetate, isoamyl acetate, hexyl acetate, cyclohexyl acetate, heptyl acetate, octyl acetate, 2-ethylhexyl acetate, 2,2,2-trifluoroethyl acetate, 2,2,3,3-tetrafluoropropyl acetate, 1,1,1,3,3,3-hexafluoro-2-propyl acetate, 2,2-bis(trifluoromethyl)propyl acetate, 2,2,3,4,4,4-hexafluorobutyl acetate, methyl propionate, ethyl propionate, propyl propionate, isopropyl propionate, butyl propionate, isobutyl propionate, sec-butyl propionate, t-butyl propionate, amyl propionate, isoamyl propionate, hexyl propionate, cyclohexyl propionate, heptyl propionate, methyl butyrate, ethyl butyrate, propyl butyrate, isopropyl butyrate, butyl butyrate, isobutyl butyrate, sec-butyl butyrate, t-butyl butyrate, amyl butyrate, isoamyl butyrate, hexyl butyrate, cyclohexyl butyrate, methyl isobutyrate, ethyl isobutyrate, propyl isobutyrate, isopropyl isobutyrate, butyl isobutyrate, isobutyl isobutyrate, sec-butyl isobutyrate, t-butyl isobutyrate, amyl isobutyrate, isoamyl isobutyrate, hexyl isobutyrate, cyclohexyl isobutyrate, methyl valerate, ethyl valerate, propyl valerate, isopropyl valerate, butyl valerate, isobutyl valerate, sec-butyl valerate, t-butyl valerate, amyl valerate, isoamyl valerate, methyl isovalerate, ethyl isovalerate, propyl isovalerate, isopropyl isovalerate, butyl isovalerate, isobutyl isovalerate, sec-butyl isovalerate, t-butyl isovalerate, amyl isovalerate, isoamyl isovalerate, methyl hexanoate, ethyl hexanoate, propyl hexanoate, isopropyl hexanoate, butyl hexanoate, isobutyl hexanoate, sec-butyl hexanoate, t-butyl hexanoate, methyl heptanoate, ethyl heptanoate, propyl heptanoate, isopropyl heptanoate, methyl octanoate, ethyl octanoate, methyl nonanate, methyl cyclohexanecarboxylate, ethyl cyclohexanecarboxylate, propyl cyclohexanecarboxylate, isopropyl cyclohexanecarboxylate, 2,2,2-trifluoroethyl cyclohexanecarboxylate, bis(2,2,2-trifluoroethyl) vaccinate, bis(2,2,2-trifluoroethyl) glutarate, ethyl trifluoroacetate, propyl trifluoroacetate, isopropyl trifluoroacetate, butyl trifluoroacetate, isobutyl trifluoroacetate, sec-butyl trifluoroacetate, t-butyl trifluoroacetate, amyl trifluoroacetate, isoamyl trifluoroacetate, hexyl trifluoroacetate, heptyl trifluoroacetate, octyl trifluoroacetate, 2-ethylhexyl trifluoroacetate, methyl difluoroacetate, ethyl difluoroacetate, 2-propoxyethyl acetate, 2-butoxyethyl acetate, 2-pentyloxyethyl acetate, 2-hexyloxyethyl acetate, 1-ethoxy-2-acetoxypropane, 1-propoxy-2-acetoxypropane, 1-butoxy-2-acetoxypropane, 3-ethoxybutyl acetate, 3-propoxybutyl acetate, 3-methoxy-3-methylbutyl acetate, 3-ethoxy-3-methylbutyl acetate, 4-methoxybutyl acetate, 4-ethoxybutyl acetate, 4-propoxybutyl acetate, 2,2,3,3-tetrafluoropropyl benzoate, 2,2,3,3,3-pentafluoropropyl benzoate, 1,1,1,3,3,3-hexafluoro-2-propyl benzoate, 2,2-bis(trifluoromethyl)propyl benzoate, 2,2,3,3,4,4,4-heptafluorobutyl benzoate, 2,2,3,4,4,4-hexafluorobutyl benzoate, 2,2,3,3,4,4,5,5,5-nonafluoropentyl benzoate, ethyl methyl carbonate, diethyl carbonate, dipropyl carbonate, dibutyl carbonate, bis(2,2,2-trifluoroethyl) carbonate, and 3,5-bis(trifluoromethyl)anisole.

Here, each of these solvents is a solvent wherein R calculated from the above formula (1) is less than 16.

The above solvents may be used alone or in combination as a mixture of two or more of them in a range where the above conditions of the present invention are satisfied. Further, so long as the above conditions are satisfied, a solvent other than those mentioned above may be used as mixed to the above solvent.

A solvent which may be used in combination with the solvent which can be used alone in the coating composition of the present invention is not particularly limited so long as it is a solvent which satisfies the above conditions in the state of a solvent mixture. Specific examples of such a combination include, for example, a solvent mixture (Hansen solubility parameters: 15.6, 6.3, 5.1, R: 1.1) of the above mentioned pinacoline (Hansen solubility parameters: 15.2, 5.7, 5.3, R: 2.0) and benzonitrile (Hansen solubility parameters: 18.8, 12.0, 3.3, R: 79.1) in a volume ratio of 90:10, a solvent mixture (Hansen solubility parameters: 16.0, 6.4, 6.4, R: 5.3) of t-butyl formate (Hansen solubility parameters: 14.8, 5.4, 7.4, R:12.9) and acetophenone (Hansen solubility parameters: 18.8, 9.0, 4.0, R: 49.4) in a volume ratio of 71:29, a solvent mixture (Hansen solubility parameters: 16.1, 4.9, 5.9, R: 3.8) of isobutyl acetate (Hansen solubility parameters: 15.1, 3.7, 6.3, R: 9.4) and methyl benzoate (Hansen solubility parameters: 18.9, 8.2, 4.7, R:47.4) in a volume ratio of 74:26, a solvent mixture (Hansen solubility parameters: 15.7, 6.0, 4.4, R: 0.1) of t-butyl formate (Hansen solubility parameters: 14.8, 5.4, 7.4, R: 12.9) and 1,3-bis(trifluoromethyl)benzene (Hansen solubility parameters: 17.0, 6.8, 0.0, R: 26.5) in a volume ratio of 59:41, etc.

In such a solvent mixture, the dissolution index (R) calculated from Hansen solubility parameters of the respective solvents constituting the solvent mixture and their volume ratio, is preferably less than 25, more preferably less than 16, most preferably less than 9. The above combinations are merely exemplary, and the solvent mixture which may be used for the coating composition of the present invention is by no means limited to such combinations.

The content of the solvent in the coating composition of the present invention is preferably from 60 to 99.95 mass%, more preferably from 70 to 99.9 mass%, based on the total amount of the composition from the viewpoint of the moldability of the fluorinated copolymer. When the content is within this range, the coating composition is excellent in handling efficiency at the time of application to form a coating film, and the coating film made of the fluorinated copolymer thereby obtainable can be made uniform.

The coating composition of the present invention comprises microparticles of the above fluorinated copolymer and the solvent to satisfy the above conditions, as essential components, but it may contain other optional components, as the case requires, within a range not to impair the effects of the present invention. Such optional components may, for example, be various additives such as an antioxidant, a photostabilizer, an ultraviolet absorber, a crosslinking agent, a lubricant, a plasticizer, a thickener, a dispersion stabilizer, a filler, a reinforcing agent, a pigment, a dye, a flame retardant, an antistatic agent, etc. The content of such optional components not to impair the effects of the present invention is at most 30 mass%, preferably at most 10 mass%, based on the total amount of the coating composition.

Further, in a case where the coating composition of the present invention is used as a coating material, a non-fluorinated resin may be mixed thereto so that the mixture may be used as a coating material, in the same manner as commonly practiced for a fluorinated coating material.

[Process for producing coating composition]

The process for producing a coating composition of the present invention will now be described. Specifically, the process of the present invention is used as a process for producing the above-described coating composition of the present invention.

The process for producing a coating composition of the present invention is characterized in that it comprises the following steps (1) and (2). (1) A step of dissolving a fluorinated copolymer having repeating units derived from ethylene and repeating units derived from tetrafluoroethylene, in a solvent capable of dissolving the fluorinated copolymer at a temperature of not higher than the melting point of the fluorinated copolymer (hereinafter referred to as "the dissolving step"). (2) A step of precipitating the fluorinated copolymer in the form of microparticles in the solvent in the solution, to convert the solution to a dispersion having the microparticles dispersed in the solvent (hereinafter referred to as "the precipitation step").

(1) Dissolving step

The dissolving step in the process of the present invention is a step of dissolving the fluorinated copolymer having repeating units derived from ethylene and repeating units derived from tetrafluoroethylene, in a solvent satisfying the above conditions i.e. a solvent which is capable of dissolving the fluorinated copolymer at a temperature of not higher than the melting point of the fluorocopolymer and which is capable of permitting microparticles to be present in a dispersed state at least at ordinary temperature under ordinary pressure when the microparticles of the fluorocopolymer are precipitated from a solution having the fluorocopolymer dissolved in the solvent.

The conditions such as the temperature, pressure, stirring, etc. in the dissolving step are not particularly limited so long as they are conditions under which the fluorinated copolymer can be dissolved in the above solvent, but as the temperature condition in the dissolving step, a temperature of not higher than the melting point of the fluorinated copolymer to be used is preferred. The melting point of the fluorinated copolymer in the present invention i.e. the above-described ETFE, is about 275°C even at the highest, and therefore, the temperature in the step of dissolving it in the above solvent is preferably about a temperature of not higher than 275°C. The temperature for dissolving the fluorinated copolymer in the solvent is more preferably at most 230°C, particularly preferably at most 200°C. Further, the lower limit of the temperature in this dissolving step is preferably 40°C, more preferably 60°C, further preferably 80°C in consideration of the operation efficiency, etc. If the temperature in the dissolving step is lower than 40°C, a sufficient dissolved state may not be obtained, and if it exceeds 275°C, a practical operation may not be easily carried out.

In the dissolving step in the process for producing the coating composition of the present invention, conditions other than the temperature are not particularly limited, and the dissolving operation is usually preferably carried out under a condition from ordinary pressure to a slightly elevated pressure at a level of 0.5 MPa. In a case where the boiling point of the solvent is lower than the temperature in the dissolving step depending upon the type of the fluorinated copolymer or the solvent, a method may be mentioned for dissolution in a pressure resistant container under a condition of at least not higher than naturally-occurring pressure, preferably not higher than 3 MPa, more preferably not higher than 2 MPa, further preferably not higher than 1 MPa, most preferably under a condition of not higher than ordinary pressure. However, usually, the dissolution can be carried out under a condition from about 0.01 to 1 MPa.

The dissolution time depends on e.g. the content of the fluorinated copolymer in the coating composition of the present invention or the shape of the fluorinated copolymer. The shape of the fluorinated copolymer to be employed is preferably a powder form from the viewpoint of the operation efficiency to shorten the dissolution time, but in view of availability, etc., one having another shape such as a pellet form may also be used.

A dissolving means in the dissolving step is not particularly limited, and a common method may be employed. For example, any method may be employed so long as necessary amounts of the respective components to be incorporated to the coating composition can be weighed, uniformly mixed and dissolved. The mixing temperature is preferably at least 40°C and at most the melting point of the fluorinated copolymer to be used, more preferably from 60 to 230°C, most preferably from 80 to 200°C. For the mixing, it is preferred to employ a common stirring and mixing machine such as a homomixer, a Henschel mixer, a Banbury mixer, a pressure kneader or a single screw or twin screw extruder, from the viewpoint of the efficiency. Further, mixing and heating of the various raw material components in the dissolving step may be carried out simultaneously, or a method may be employed wherein the respective raw material components are mixed, and then heated while stirring as the case requires.

In a case where the dissolution is carried out under an elevated pressure, an apparatus such as an autoclave equipped with a stirrer may be employed. The shape of stirring vanes may, for example, be a marine propeller vane, an anchor vane, a turbine vane or the like. In a case where the operation is carried out in a small scale, a magnetic stirrer or the like may be employed.

(2) Precipitation step

The solution having the fluorinated copolymer dissolved in the above solvent, as obtained in the dissolving step (1), is held under such a condition that the fluorinated copolymer will be precipitated as microparticles in the above solvent, usually at ordinary temperature under ordinary pressure, whereby microparticles of the fluorinated copolymer will be precipitated in the solvent, and the coating composition of the present invention having microparticles of the fluorinated copolymer dispersed in the solvent, can be obtained. Specifically, by cooling the solution obtainable in the dissolving step (1) to a temperature of at most the temperature at which the fluorinated copolymer will be precipitated as microparticles, usually to ordinary temperature, it is possible to precipitate microparticles of the fluorinated copolymer in the solvent. In such a case, the cooling method is not particularly limited, and it may be annealing or quenching.

Thus, it is possible to obtain the coating composition of the present invention having microparticles of the fluorinated copolymer dispersed in the solvent. Here, the average particle size of microparticles of the fluorinated copolymer in the obtained coating composition is preferably from 0.005 to 2 $\mu$m, more preferably from 0.005 to 1 $\mu$m, most preferably from 0.01 to 0.5 $\mu$m, as an average particle size measured by a small-angle X-ray scattering technique at 20°C.

By coating a substrate with the coating composition obtained as described above, for example, by the following method for forming a coating film of the present invention, or by dipping a substrate in the coating composition, it becomes possible to apply a coating film of the fluorinated copolymer on the substrate.

[Process for forming coating film]

The process for forming a coating film of the present invention is characterized in that it comprises a composition-applying step of applying the above described coating composition of the present invention to a substrate to form a solvent-containing coating film, and a solvent-removing step of removing the solvent from the solvent-containing coating film to obtain a coating film containing no solvent.

(1) Composition-applying step

In the composition-applying step in the process for forming a coating film of the present invention, the means to be employed to apply the coating composition to a substrate is not particularly limited, and a method which is commonly used, may be employed. The means to be employed for the coating may, for example, be a method such as gravure coating, dip coating, die coating, electrostatic coating, brush coating, screen printing, roll coating or spin coating.

In the composition-applying step, the coating composition of the present invention may not necessarily be applied in such a state that the fluorinated copolymer is dissolved in the solvent. The coating composition of the present invention is characterized in that it is in a state uniformly dispersed in the solvent at a temperature of at most the temperature at which the fluorinated copolymer dispersed in the solvent will be dissolved. Accordingly, in the composition-applying step, it is possible to apply this dispersion i.e. the coating composition of the present invention to a substrate at a temperature of lower than the temperature for dissolving the fluorinated copolymer in the solvent and to remove (dry) the solvent at a relatively low temperature as described below, and it is also preferred to do so from the following point of view or from the viewpoint of operation efficiency. In the process for forming a coating film of the present invention, it is possible to obtain a dense and flat coating film by adjusting the application temperature or the drying temperature to be such a low temperature.

In the composition-applying step, the application temperature may change depending upon the coating composition to be used, but it is more preferably from 0 to 210°C, further preferably from 0 to 130°C, most preferably from 0 to 50°C. If the application temperature is lower than 0°C, the dispersed state of the fluorinated copolymer cannot be said to be sufficient, and if it exceeds 210°C, the contained solvent tends to be easily evaporated, whereby formation of bubbles, etc. is likely, such being undesirable.

(2) Solvent-removing step

The solvent-removing step is a step of removing the solvent from the solvent-containing coating film obtained in the above composition-applying step.

In the solvent-removing step, the temperature for the removal of the solvent i.e. the drying temperature, is preferably from 0 to 350°C, more preferably from 0 to 270°C, most preferably 0 to 200°C. If the temperature (drying temperature) at the time of such removal of the solvent is lower than 0°C, it takes too much time for the removal of the solvent, and if it exceeds 350°C, coloration, decomposition, etc. are likely to occur, such being undesirable.

Thus, in the process for forming a coating film of the fluorinated copolymer of the present invention, it is not required to carry out application or drying the coating composition at a high temperature, whereby it becomes possible to form a coating film without bringing about decomposition or deformation of the substrate, even in the case of a material having low heat resistance such as plastic, paper or cloth.

Further, the material or shape of the substrate to be coated with the fluorinated copolymer is not particularly limited, and coating may be applied to e.g. a metal such as iron, stainless steel, aluminum, titanium, copper or silver, a glass such as window glass, a mirror or synthetic quartz, silicon, an organic material such as polycarbonate (PC), polyethylene terephthalate (PET), polymethyl methacrylate (PMMA), glass fiber-reinforced plastic (FRP) or polyvinyl chloride (PVC), a stone material, a wood material, ceramics, cloth, paper, etc.

Here, in the process for forming a coating film of the fluorinated copolymer of the present invention, pretreatment may be applied to the substrate for the purpose of e.g. improvement of the adhesion between the substrate and the coating film. For example, it is possible to apply e.g. a silane coupling agent or a polyethyleneimine to the substrate, physically treating the surface by e.g. sandblasting, or carrying out e.g. treatment by corona discharge, etc.

By thus applying the coating composition of the present invention obtained by the process of the present invention to a substrate, it is possible to provide the above described coating film of the fluorinated copolymer and an article coated with such a coating film.

Further, the coating film of the fluorinated copolymer obtainable by the process for forming a coating film of the present invention, may be separated from the substrate and may be used as a film-form shaped product. The film of the fluorinated copolymer i.e. ETFE film thus obtainable is thin and uniform as compared with an TFE film obtainable by usual melt forming.

The thickness of the obtainable coating film or film-form shaped product can be freely selected depending upon the particular purpose. If a solution or dispersion having a high concentration is employed, a thick film may be obtained, and if a solution or dispersion having a low concentration is employed, a thin coating film may be obtained. Further, by carrying out the application step repeatedly, it is also possible to obtain a thicker film.

By virtue of the above-mentioned characteristics, the coating composition of the present invention has various uses including, for example, protective coating agents, water repellent coating agents, low reflection coating agents, antifouling coating agents and electrically insulated covering materials in the optical, electric and electronic fields, for e.g. optical fiber clad materials, lenses, articles for display panels or displays, optical disks, semiconductor elements, hybrid IC, liquid crystal cells, printed circuit boards, copying machines, ferrite carries for printers, photosensitive drums, film condensers, glass windows, resin windows, various films, etc.; protective, weather resistant or antifouling coating agents for e.g. articles for transport such as electric cars, buses, trucks, automobiles, ships, aircrafts, etc., articles for buildings such as outer walls, roof material, sealant portions, bridges or tunnels, articles in medical and chemical fields such as syringes, pipettes, thermometers, Petri dishes, measuring cylinders, etc., other solder masks, solder resists, rubbers and plastics; protective, weather resistant or antifouling coating agents for stone materials, wood materials, fibers, cloths or paper; IC sealing agents; corrosion-preventive coating materials; resin-attachment preventive agents; ink-attachment preventive agents; articles for separation membranes; primers for laminated steel plate; various adhesives or bonding agents; etc.

The above mentioned articles for solar cells may further specifically be a protective covering material made of glass or resin, a transparent conductive component, a protective coating material such as a back sheet, a gas barrier layer, a support resin layer for a thin plate glass, an adhesive layer, etc.

The above articles for display panels or displays may further specifically be a protective coating agent, an antifouling coating agent, a low reflection coating agent, a support resin for a thin plate glass, etc. for transparent components (glass substrates and resin substrates) to be used for liquid crystal display panels, plasma display panels, electrochromic display panels, electroluminescence display panels or touch panels.

The above articles for transport may further specifically be, a protective coating agent, an antifouling coating agent, a low reflection coating agent, a laminated material for safety glass, etc. for external components such as surface materials of display equipments, internal components such as surface materials of instrument panels, bodies, mirrors, etc. mounted on the transport.

The above articles for separation membranes may further specifically be a functional layer such as a reverse osmosis membrane or a nano filtration membrane, a functional layer for a gas separation membrane to separate e.g. carbon dioxide or hydrogen, an adhesive to be used for the production of a membrane module, an antifouling coating agent, etc.

Further, the coating composition of the present invention can be used advantageously as a composition to prepare an interlayer dielectric film or a protective film in a semiconductor element or an integrated circuit device. When the coating composition of the present invention is used for such an application, it is possible to obtain a semiconductor element integrated circuit device having a high response speed with little malfunction, utilizing the properties of the fluorinated copolymer such as the low water absorbing property, low dielectric constant and high heat resistance.

Further, the coating composition of the present invention can be used advantageously as a protective coating agent or an antifouling coating agent for a light collecting mirror to be used for concentrated solar power generation, or as a protective coating agent for a sealing portion such as a backing resin for the light collecting mirror. When the coating composition of the present invention is used for such an application, it is possible to obtain a power generation system which has a high durability and which does not require maintenance, by virtue of the properties of the fluororesin such as high heat resistance and low water absorbing property.

EXAMPLES

Now, Examples of the present invention will be described, but it should be understood that the present invention is by no means limited to such Examples.

(Dissolution procedure)

The following Examples and Comparative Examples were carried out by the following method unless otherwise specified.

A fluorinated copolymer, a solvent and a stirrer were put in a test tube with a lid made of borosilicate glass and having a thickness of 1 mm and an outer diameter of 16.5 mm. The relative amounts of the fluorinated copolymer and the solvent were adjusted so that the amount of the fluorinated copolymer to the amount of the solvent became from 1 to 5 mass%.

The test tube was heated by means of thoroughly stirred and temperature-controlled oil bath and heating block.

Whether or not the fluorinated copolymer was dissolved, was visually observed, and when the content in the test tube was observed to be a transparent uniform solution, such a state was judged to be a dissolved state.

(Methods for evaluating dispersion of microparticles and coating film)

Evaluation of the dispersions of microparticles and the coating films obtained in Examples and Comparative Examples was carried out with respect to the following items by the following methods.

(1) Average particle size

The average particle size of ETFE microparticles in a dispersion was measured under a room temperature condition by a small-angle X-ray scattering method by means of a small-angle scattering measuring apparatus (SAXS) (Nano-Viewer, manufactured by Rigaku Corporation, detector: imaging plate, data processing software: particle size/ pore size analyzing software NANO-Solver, manufactured by Rigaku Corporation). Further, by a transmission electron microscope (TEM) (JEM-1230 manufactured by JEOL Ltd., the primary particle sizes of ETFE microparticles were observed to confirm that the results obtained by the above small-angle X-ray scattering method were correct.

(2) Film thickness

With respect to a coating film obtained by potting, the film thickness was measured by means of a stylus profilometer (DEKTAK 3ST, manufactured by Sloan), and with respect to a coating film obtained by a method other than potting, the film thickness was measured by means of a non-contact optical thin film measuring apparatus (Filmetrics F-20, manufactured by Filmetrics Japan, Inc.).

(3) Adhesion

An adhesion test was carried out in accordance with JIS K-5600. That is, into a fluorinated copolymer thin film on a substrate, 11 cut lines orthogonal at 2 mm intervals were imparted by a cutter knife to form a lattice pattern with 100 sections, and a pressure sensitive adhesive tape was press-bonded onto this lattice pattern and instantaneously pulled off by pulling an end of the tape, whereupon the state of the thin film remaining on the substrate surface without being peeled was observed. Evaluation was made by the state of peeling after repeating the peeling test five times. A case where the film remained to be bonded at 91 sections or more is regarded as good O, a case where the film remained to be bonded at from 90 to 51 sections is regarded to be fair Δ, and a case where the film remained to be bonded at from 50 to 0 sections is regarded to be no good x.

(4) Water contact angle

The static contact angle to water, of the film surface was measured by means of a contact angle meter (automatic contact angle meter DM500, manufactured by Kyowa Interface Science Co., Ltd.).

(5) Reflectance

The reflectance at 550 nm, of the film surface, was measured by means of a spectrophotometer (manufactured by Shimadzu Corporation).

[Example 1]

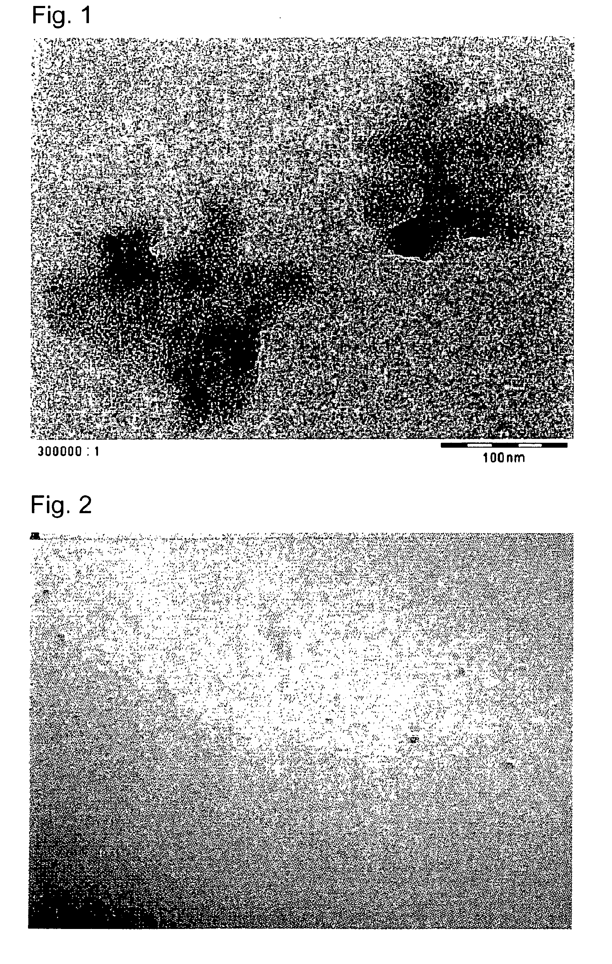

In a test tube with a lid made of borosilicate glass, 50 mg of ETFE (constituting monomers and molar ratio: tetrafluoroethylene/ethylene/hexafluoropropylene/3,3,4,4,5,5,6,6,6-nonafluoro-1-hexene/itaconic anhydride=47.7/42.5/8.4/1.2/0.2, melting point: 188°C, hereinafter referred to as "ETFE 1 ") as the fluorinated copolymer and 2.45 g of diisopropyl ketone (R calculated by the above-mentioned formula (1) (hereinafter represented simply by "R") =0) were put and heated at 140°C for 15 minutes with stirring, whereby a uniform transparent solution was obtained.
The test tube was gradually cooled to room temperature over a period of 15 minutes to obtain a uniform dispersion of microparticles of the fluorinated copolymer free from sedimentation (concentration of ETFE 1: 2 mass%). The average particle size of microparticles of the fluorinated copolymer was 20 nm as an average particle size measured by a small-angle X-ray scattering technique at 20°C.
Further, this dispersion was diluted to 0.05 mass% and observed by a transmission electron microscope, whereby the primary particle size was confirmed to be from 20 to 30 nm. In Fig. 1, a transmission electron microscopic (TEM) photograph (300,000 magnifications) is shown. Here, in the TEM photographing, the solvent in the dispersion is removed at the time of preparing a sample, and accordingly in an obtainable photograph, for example, as shown in the photograph in Fig. 1, particles of the fluorinated copolymer are considered to form agglomerated particles. When the photograph in Fig. 1 is observed, it is evident that large two massive particles are present in the photograph, and the massive particles are, respectively, formed by gathering of many smaller particles. Such massive particles represent agglomerated particles of ETFE 1, and individual particles constituting such massive particles are primary particles of ETFE 1. The primary particle size observed as described above is meant for the particle size of primary particles of ETFE 1 when the particles of the photograph are identified in such a manner.
This dispersion was applied on a glass substrate at room temperature by potting, followed by air drying and then heated for 3 minutes on a hot plate of 100°C for drying to obtain a glass substrate having a thin film of ETFE 1 formed on its surface. The surface of the obtained thin film was observed by an optical microscope (50 magnifications), whereby it was confirmed to be a uniform smooth film. In Fig. 2, the optical microscopic photograph (50 magnifications) of the surface of this thin film made of ETFE 1 is shown. Further, the film thickness was measured by means of a stylus profilometer and found to be 3 μm. The adhesion of the obtained ETFE 1 film was evaluated, whereby no peeling was observed.

[Example 2]

The dispersion of microparticles of the fluorinated copolymer (ETFE 1) obtained in Example 1 was applied on a PET (polyethylene terephthalate) film (COSMOSHINE (registered trademark) A4300 manufactured by TOYOBO CO., LTD.) to form a thin film of ETFE 1 in the same manner as in Example 1. Further, the film thickness was measured by means of a stylus profilometer and found to be 3 μm. The adhesion of the obtained ETFE 1 film was evaluated, whereby no peeling was observed.

[Example 3]

A thin film of ETFE 1 was formed on an aluminum plate in the same manner as in Example 1 except that the dispersion of microparticles of the fluorinated copolymer (ETFE 1) obtained in Example 1 was dried at 150°C. The adhesion of the obtained ETFE 1 film was evaluated, whereby no peeling was observed.

[Example 4]

The dispersion of microparticles of the fluorinated copolymer (ETFE 1) obtained in Example 1 was applied on a copper plate to form a thin film of ETFE 1 in the same manner as in Example 3. The adhesion of the obtained ETFE 1 film was evaluated, whereby no peeling was observed.

[Example 5]

The dispersion of microparticles of ETFE 1 was obtained in the same manner as in Example 1 except that the cooling method of the fluorinated copolymer solution was changed to cooling to room temperature by immersion in a methanol liquid of dry ice, and by using this dispersion, in the same manner as in Example 1, a glass substrate having a thin film of ETFE 1 formed on its surface was obtained. The obtained ETFE 1 film was observed by an optical microscope, whereby it was confirmed to be a uniform flat film. Further, the film thickness was measured by a stylus profilometer and found to be 3 μm. The adhesion of the obtained ETFE 1 film was evaluated, whereby no peeling was observed.

[Example 6]

A glass plate was immersed in the dispersion of microparticles of the fluorinated copolymer (ETFE 1) obtained in Example 5, vertically pulled up at a rate of 30 mm/min and dried for 10 minutes in an oven at 100°C to obtain a glass substrate coated with ETFE 1 on both sides. One side reflectance of this glass plate was 1.4% at 550 nm.

[Example 7]

A silicon substrate coated with ETFE 1 on both sides was obtained in the same manner as in Example 6 except that the substrate was changed to a silicon substrate. The film thickness of the obtained same film was measured by means of a non-contact optical thin film measuring apparatus and found to be 100 nm. The static contact angle to water, of the surface of this film, was 113°.

[Example 8]

The dispersion of the fluorinated copolymer (ETFE 1) obtained in Example 1 was applied on a glass substrate at room temperature, followed by air drying in the same manner as in Example 1 and then heated for one minute on a hot plate at 200°C for drying to obtain a glass substrate having a thin film of ETFE 1 formed on its surface. The obtained thin film was observed by an optical microscope, whereby it was confirmed to be a uniform smooth film. Further, the film thickness was measured by means of a stylus profilometer and found to be 3 μm. The adhesion of the obtained ETFE 1 film was evaluated, whereby no peeling was observed. The static contact angle to water, of the surface of this film, was 103°.

[Example 9]

A dispersion of microparticles of ETFE 1 was obtained in the same manner as in Example 1 except that 5 mg of 2-(perfluorohexyl)ethanol was added as a dispersion stabilizer in addition to ETFE 1 and diisopropyl ketone, and further by using this dispersion, in the same manner as in Example 1, a glass substrate having a thin film of ETFE 1 formed on its surface was obtained. The obtained ETFE 1 film was observed by an optical microscope, whereby it was confirmed to be a uniform smooth film. Further, the film thickness was measured by means of a stylus profilometer and found to be 3 μm. The adhesion of the obtained ETFE 1 film was evaluated, whereby no peeling was observed.

[Example 10]

A dispersion of microparticles of ETFE 2 was obtained in the same manner as in Example 1 except that ETFE (constituting monomers and molar ratio: tetrafluoroethylene/ethylene/hexafluoropropylene/3,3,4,4,5,5,6,6,6-nonafluoro-1-hexene/itaconic anhydride=44.6/45.6/8.1/1.3/0.4, melting point: 192°C, hereinafter referred to as "ETFE 2") was used as the fluorinated copolymer. The average particle size of the microparticles of ETFE 2 was 20 nm as an average particle size measured by a small-angle X-ray scattering technique at 20°C. Further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 3 μm. The adhesion of the obtained ETFE 2 film was evaluated, whereby no peeling was observed.

[Example 11]

A dispersion of microparticles of ETFE 2 was obtained in the same manner as in Example 1 except that 2.38 g of 2-hexanone (R=0.8) as the solvent and 125 mg of ETFE 2 were used, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 10 μm. The adhesion of the obtained ETFE 2 film was evaluated, whereby no peeling was observed.

[Example 12]

A dispersion of microparticles of ETFE 2 was obtained in the same manner as in Example 11 except that 2-pentanone (R=4.1) was used as the solvent, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by a stylus profilometer and found to be 9 μm. The adhesion of the obtained ETFE 2 film was evaluated, whereby no peeling was observed.

[Example 13]

A dispersion of microparticles of ETFE 2 was obtained in the same manner as in Example 11 except that 2-heptanone (R=1.0) was used as the solvent, and heating was carried out at 150°C, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by a stylus profilometer and found to be 10 μm. The adhesion of the obtained ETFE 2 film was evaluated, whereby no peeling was observed.

[Example 14]

The dispersion of microparticles of the fluorinated copolymer (ETFE 2) obtained in Example 13, was applied on a silicon substrate by using a bar coater having a bar set for a wet film thickness of 200 μm. After air drying at room temperature, heating for three minutes on a hotplate at 100°C was carried out to obtain a silicon substrate having a thin film of ETFE 2 formed on its surface. The obtained ETFE 2 film was observed by an optical microscope, whereby it was confirmed to be a uniform smooth film. The film thickness was measured by means of a non-contact optical thin film measuring apparatus (Filmetrics F-20, manufactured by Filmetrics Japan, Inc.) and found to be 1 μm. The adhesion of the obtained ETFE 2 film was evaluated, whereby no peeling was observed. Further, the static contact angle to water, of the surface of this film, was 112°.

[Example 15]

A dispersion of microparticles of ETFE 2 was obtained in the same manner as in Example 1 except that 2.45 g of methyl isopropyl ketone (R=1.7) as the solvent and 50 mg of ETFE 2 were used, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 2 μm. The adhesion of the obtained ETFE 2 film was evaluated, whereby no peeling was observed.

[Example 16]

A dispersion of microparticles of ETFE 2 was obtained in the same manner as in Example 15 except that methyl isobutyl ketone (R=0.8) was used as the solvent, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 3 $\mu$m. The adhesion of the obtained ETFE 2 film was evaluated, whereby no peeling was observed.

[Example 17]

A dispersion of microparticles of ETFE 2 was obtained in the same manner as in Example 15 except that pinacoline (R=2.0) was used as the solvent, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 3 $\mu$m. The adhesion of the obtained ETFE 2 film was evaluated, whereby no peeling was observed.

[Example 18]

A dispersion of microparticles of ETFE 2 was obtained in the same manner as in Example 15 except that isoamyl methyl ketone (R=0.4) was used as the solvent, and heating was carried out at 150°C, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 4 $\mu$m. The adhesion of the obtained ETFE 2 film was evaluated, whereby no peeling was observed.

[Example 19]

A dispersion of microparticles of ETFE 2 was obtained in the same manner as in Example 15 except that isobutyl acetate (R=9.4) was used as the solvent, and heating was carried out at 150°C, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 3 $\mu$m. The adhesion of the obtained ETFE 2 film was evaluated, whereby no peeling was observed.

[Example 20]

A dispersion of microparticles of ETFE 2 was obtained in the same manner as in Example 15 except that sec-butyl acetate (R=16.9) was used as the solvent, and heating was carried out at 145°C, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 3 $\mu$m. The adhesion of the obtained ETFE 2 film was evaluated, whereby no peeling was observed.

[Example 21]

A dispersion of microparticles of ETFE 2 was obtained in the same manner as in Example 15 except that isoamyl formate (R=5.3) was used as the solvent, and heating was carried out at 150°C, and further, by using this dispersion, in the same manner as in Example 1, a glass substrate having a thin film of ETFE 2 formed on its surface, was obtained. The obtained ETFE 2 film was observed by an optical microscope, whereby it was confirmed to be a uniform smooth film. Further, the film thickness was measured by means of a stylus profilometer and found to be 3 $\mu$m. The adhesion of the obtained ETFE 2 film was evaluated, whereby no peeling was observed.

[Example 22]

A dispersion of microparticles of ETFE 3 was obtained in the same manner as in Example 1 except that ETFE (constituting monomers and molar ratio: tetrafluoroethylene/ethylene/3,3,4,4,4-pentafluoro-1-butene/itaconic anhydride=57.5/39.9/2.3/0.3, melting point: 240°C, hereinafter referred to as "ETFE 3") was used as the fluorinated copolymer, and the heating temperature was changed to 180°C, and further, by using this dispersion, in the same manner as in Example 1, a glass substrate having a thin film of ETFE 3 formed on its surface, was obtained. The obtained ETFE 3 film was observed by an optical microscope, whereby it was confirmed to be a uniform smooth film. Further, the film thickness was measured by means of a stylus profilometer and found to be 2 $\mu$m. The adhesion of the obtained ETFE 3 film was evaluated, whereby no peeling was observed.

[Example 23]

A dispersion of microparticles of ETFE 4 was obtained in the same manner as in Example 1 except that Neoflon (registered trademark) RP-4020 manufactured by Daikin Industries, Ltd. (melting point: 155-170°C, hereinafter referred to as "ETFE 4") was used as the fluorinated copolymer, and further, by using this dispersion, in the same manner as in Example 1, a glass substrate having a thin film of ETFE 4 formed on its surface, was obtained. The obtained ETFE 4 film was observed by an optical microscope, whereby it was confirmed to be a uniform smooth film. Further, the film thickness was measured by means of a stylus profilometer and found to be 3 $\mu$m. The adhesion of the obtained ETFE 4 film was evaluated, whereby no peeling was observed.

[Example 24]

A thin film of ETFE was formed on an aluminum plate in the same manner as in Example 1 except that the dispersion of microparticles of the fluorinated copolymer (ETFE 4) obtained in Example 23 was dried at 150°C. The adhesion of the obtained ETFE 4 film was evaluated, whereby no peeling was observed.

[Comparative Example 1]

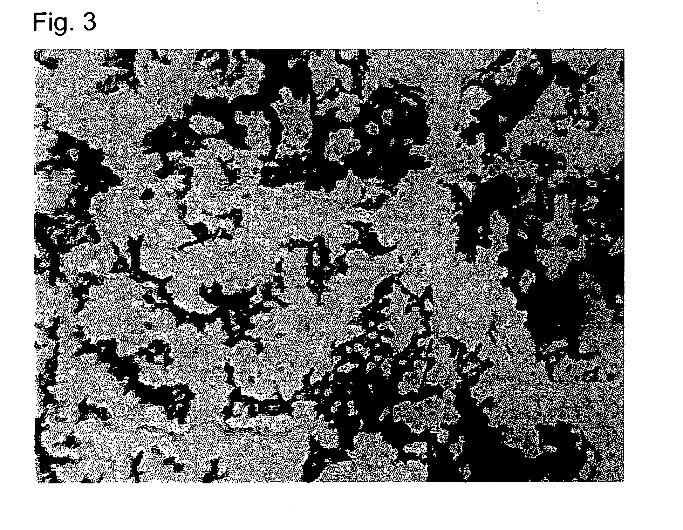

In a test tube with a lid made of borosilicate glass, 50 mg of ETFE 1 as the fluorinated copolymer and 4.95 g of cyclopentanone (R=58.6) were put and heated at 150°C with stirring to obtain a uniform transparent solution. The test tube was gradually cooled to room temperature, during which the fluorinated copolymer precipitated, whereby a slurry containing white sediment was obtained. This slurry was slowly stirred, and applied on a glass substrate, followed by drying in the same manner as in Example 1, to obtain a glass substrate having a thin film of ETFE 1 formed on its surface.
The surface of the obtained ETFE 1 film was observed by an optical microscope, whereby it was confirmed to be a non-uniform film having many defects. An optical microscopic photograph (50 magnifications) of the surface of this thin film made of ETFE 1 is shown in Fig. 3. Here, the black portions in the photograph show the polymer, and the white portions show the substrate surface, and it is evident from this photograph that this thin film is a non-uniform film having many defects.
ETFE, the solvent and other components used for the preparation of the coating composition (the dispersion of microparticles of ETFE) in each of the above Examples and Comparative Example, the preparation conditions for the composition, the average particle size of ETFE microparticles in the obtained coating composition, as well as the preparation conditions for a coating film prepared by using the composition, and the results of evaluation of the properties of the obtained ETFE film, are shown in Tables 1 to 4. Further, Hansen solubility parameters of the solvent used in each Example and the value R calculated by the above formula (1) are shown in Table 5.

[Table 1]

| | Ex. No. | Ex. 1 | Ex. 2 | Ex. 3 | Ex. 4 | Ex. 5 | Ex. 6 | Ex. 7 |
|---|---|---|---|---|---|---|---|---|
| Composition | Fluorinated copolymer | ETFE 1 | ETFE 1 | ETFE 1 | ETFE 1 | ETFE 1 | ETFE 1 | ETFE 1 |
| | Melting point of fluorinated copolymer (°C) | 188 | 188 | 188 | 188 | 188 | 188 | 188 |
| | Solvent 1 | Diisopropyl ketone | Diisopropyl ketone | Diisopropyl ketone | Diisopropyl ketone | Diisopropyl ketone | Diisopropyl ketone | Diisopropyl ketone |
| | Solvent 2 | - | - | - | - | - | - | - |
| | Additive | - | - | - | - | - | - | - |
| | Concentration of fluorinated copolymer (mass%) | 2 | 2 | 2 | 2 | 2 | 2 | 2 |
| | Dissolution temperature (°C) | 140 | 140 | 140 | 140 | 140 | 140 | 140 |
| | Cooling method | Annealing | Annealing | Annealing | Annealing | Dry ice/ methanol | Dry ice/ methanol | Dry ice/ methanol |
| | Average particle size (nm) | 20 | 20 | 20 | 20 | - | - | - |
| | Appearance of dispersion at room temperature (visual observation) | Uniform without sediment | Uniform without sediment | Uniform without sediment | Uniform without sediment | Uniform without sediment | Uniform without sediment | Uniform without sediment |
| | Substrate | Glass plate | PET plate | Aluminum plate | Copper plate | Glass plate | Glass plate | Silicon substrate |
| Production conditions | Coating method | Potting | Potting | Potting | Potting | Potting | Dipping | Dipping |
| | Pulling out (application) speed | - | - | - | - | - | 30 mm/min | 30 mm/min |
| | Application temperature (°C) | Room temp. | Room temp. | Room temp. | Room temp. | Room temp. | Room temp. | Room temp. |
| | Drying temperature (°C) | Room temp. to 100°C | Room temp. to 100°C | Room temp. to 150°C | Room temp. to 150°C | Room temp. to 100°C | Room temp. to 100°C | Room temp. to 100°C |
| Evaluation results | Profile (optical microscopic observation) | Uniform and smooth (see Fig. 2) | Uniform and smooth | Uniform and smooth | Uniform and smooth | Uniform and smooth | Uniform and smooth | Uniform and smooth |
| | Film thickness (µm) | 3 | 3 | - | - | 3 | - | 0.1 |
| | Adhesion | ○ | ○ | ○ | ○ | ○ | - | - |
| | Contact angle to water (degree[°]) | - | - | - | - | - | - | 113 |
| | Reflectance (%, 550 nm) | - | - | - | - | - | 1.4 | - |

EP 2 559 742 A1

[Table 2]

| | Ex. No. | Ex. 8 | Ex. 9 | Ex. 10 | Ex. 11 | Ex. 12 | Ex. 13 | Ex. 14 |
|---|---|---|---|---|---|---|---|---|
| Composition | Fluorinated copolymer | ETFE 1 | ETFE 1 | ETFE 2 | ETFE 2 | ETFE 2 | ETFE 2 | ETFE 2 |
| | Melting point of fluorinated copolymer (°C) | 188 | 188 | 192 | 192 | 192 | 192 | 192 |
| | Solvent 1 | Diisopropyl ketone | Diisopropyl ketone | Diisopropyl ketone | 2-hexanone | 2-pentanone | 2-heptanone | 2-heptanone |
| | Solvent 2 | - | - | - | - | - | - | - |
| | Additive | - | 2-(perfluoro hexyl)ethanol | - | - | - | - | - |
| | Concentration of fluorinated copolymer (mass%) | 2 | 2 | 2 | 5 | 5 | 5 | 5 |
| | Dissolution temperature (°C) | 140 | 140 | 140 | 140 | 140 | 150 | 150 |
| | Cooling method | Annealing | Annealing | Annealing | Annealing | Annealing | Annealing | Annealing |
| | Average particle size (nm) | 20 | - | 20 | - | - | - | - |
| | Appearance of dispersion at room temperature (visual observation) | Uniform without sediment | Uniform without sediment | Uniform without sediment | Uniform without sediment | Uniform without sediment | Uniform without sediment | Uniform without sediment |
| | Substrate | Glass plate | Glass plate | Glass plate | Glass plate | Glass plate | Glass plate | Silicon substrate |
| Production conditions | Coating method | Potting | Potting | Potting | Potting | Potting | Dipping | Bar coating |
| | Pulling out (application) speed | - | - | - | - | - | - | - |
| | Application temperature (°C) | Room temp. | Room temp. | Room temp. | Room temp. | Room temp. | Room temp. | Room temp. |
| | Drying temperature (°C) | Room temp. to 200°C | Room temp. to 100°C | Room temp. to 100°C | Room temp. to 100°C | Room temp. to 100°C | Room temp. to 100°C | Room temp. to 100°C |
| Evaluation results | Profile (optical microscopic observation) | Uniform and smooth | Uniform and smooth | Uniform and smooth | Uniform and smooth | Uniform and smooth | Uniform and smooth | Uniform and smooth |
| | Film thickness (μm) | 3 | 3 | 3 | 10 | 9 | 10 | 1 |
| | Adhesion | ○ | ○ | ○ | ○ | ○ | ○ | ○ |
| | Contact angle to water (degree[°]) | 103 | - | - | - | - | - | 112 |
| | Reflectance (%, 550 nm) | - | - | - | - | - | - | - |

EP 2 559 742 A1

[Table 3]

| | Ex. No. | Ex. 15 | Ex. 16 | Ex. 17 | Ex. 18 | Ex. 19 | Ex. 20 | Ex. 21 |
|---|---|---|---|---|---|---|---|---|
| Composition | Fluorinated copolymer | ETFE 2 | ETFE 2 | ETFE 2 | ETFE 2 | ETFE 2 | ETFE 2 | ETFE 2 |
| | Melting point of fluorinated copolymer (°C) | 192 | 192 | 192 | 192 | 192 | 192 | 192 |
| | Solvent 1 | Methyl isopropyl ketone | Methyl isopropyl ketone | Pinacoline | Isoamyl methyl ketone | Isobutyl acetate | Sec-butyl acetate | Isoamyl formate |
| | Solvent 2 | - | - | - | - | - | - | - |
| | Additive | - | - | - | - | - | - | - |
| | Concentration of fluorinated copolymer (mass%) | 2 | 2 | 2 | 2 | 2 | 2 | 2 |
| | Dissolution temperature (°C) | 140 | 140 | 140 | 150 | 150 | 145 | 150 |
| | Cooling method | Annealing | Annealing | Annealing | Annealing | Annealing | Annealing | Annealing |
| | Average particle size (nm) | - | - | - | - | - | - | - |
| | Appearance of dispersion at room temperature (visual observation) | Uniform without sediment | Uniform without sediment | Uniform without sediment | Uniform without sediment | Uniform without sediment | Uniform without sediment | Uniform without sediment |
| | Substrate | Glass plate | Glass plate | Glass plate | Glass plate | Glass plate | Glass plate | Glass plate |
| Production conditions | Coating method | Potting | Potting | Potting | Potting | Potting | Potting | Potting |
| | Pulling out (application) speed | - | - | - | - | - | - | - |
| | Application temperature (°C) | Room temp. | Room temp. | Room temp. | Room temp. | Room temp. | Room temp. | Room temp. |
| | Drying temperature (°C) | Room temp. to 100°C | Room temp. to 100°C | Room temp. to 100°C | Room temp. to 100°C | Room temp. to 100°C | Room temp. to 100°C | Room temp. to 100°C |
| Evaluation results | Profile (optical microscopic observation) | Uniform and smooth | Uniform and smooth | Uniform and smooth | Uniform and smooth | Uniform and smooth | Uniform and smooth | Uniform and smooth |
| | Film thickness (μm) | 2 | 3 | 3 | 4 | 3 | 3 | 3 |
| | Adhesion | ○ | ○ | ○ | ○ | ○ | ○ | ○ |
| | Contact angle to water (degree[°]) | - | - | - | - | - | - | - |
| | Reflectance (%, 550 nm) | - | - | - | - | - | - | - |

EP 2 559 742 A1

[Table 4]

|  | Ex. No. | Ex. 22 | Ex. 23 | Ex. 24 | Comp. Ex. 1 |
|---|---|---|---|---|---|
| Composition | Fluorinated copolymer | ETFE 3 | ETFE 4 | ETFE 4 | ETFE 1 |
| | Melting point of fluorinated copolymer (°C) | 240 | 155-170 | 155-170 | 188 |
| | Solvent 1 | Isopropyl ketone | Isopropyl ketone | Isopropyl ketone | Cyclopentanone |
| | Solvent 2 | - | - | - | - |
| | Additive | - | - | - | - |
| | Concentration of fluorinated copolymer (mass%) | 2 | 2 | 2 | 1 |
| | Dissolution temperature (°C) | 180 | 140 | 140 | 150 |
| | Cooling method | Annealing | Annealing | Annealing | Annealing |
| | Average particle size (nm) | - | - | - | - |
| | Appearance of dispersion at room temperature (visual observation) | Uniform without sediment | Uniform without sediment | Uniform without sediment | Polymer precipitated and sedimented |
| Production conditions | Substrate | Glass plate | Glass plate | Aluminum plate | Glass plate |
| | Coating method | Potting | Potting | Potting | Potting |
| | Pulling out (application) speed | - | - | - | - |
| | Application temperature (°C) | Room temp. | Room temp. | Room temp. | Room temp. |
| | Drying temperature (°C) | Room temp. to 100°C | Room temp. to 100°C | Room temp. to 150°C | Room temp. to 100°C |
| Evaluation results | Profile (optical microscopic observation) | Uniform and smooth | Uniform and smooth | Uniform and smooth | Non-uniform with defects (see Fig. 3) |
| | Film thickness (μm) | 3 | 3 | - | - |
| | Adhesion | ○ | ○ | ○ | - |
| | Contact angle to water (degree[°]) | - | - | - | - |
| | Reflectance (%, 550 nm) | - | - | - | - |

[Table 5]

| Ex. 1 | Solvent | $\delta d$ | $\delta p$ | $\delta h$ | R |
|---|---|---|---|---|---|
| 1-10 22-2 | Diisopropyl ketone | 15.7 | 5.7 | 4.3 | 0.0 |
| 11 | 2-hexanone | 15.3 | 6.1 | 4.1 | 0.8 |
| 12 | 2-pentanone | 16.0 | 7.6 | 4.7 | 4.1 |
| 13-14 | 2-heptanone | 16.2 | 5.7 | 4.1 | 1.0 |
| 15 | Methyl isopropyl ketone | 15.8 | 6.8 | 5.0 | 1.7 |
| 16 | Methyl isobutyl ketone | 15.3 | 6.1 | 4.1 | 0.8 |
| 17 | Pinacoline | 15.2 | 5.7 | 5.3 | 2.0 |
| 18 | Isoamyl methyl ketone | 16.0 | 5.7 | 4.1 | 0.4 |
| 19 | Isobutyl acetate | 15.1 | 3.7 | 6.3 | 9.4 |
| 20 | Sec-butyl acetate | 15.0 | 3.7 | 7.6 | 16.9 |
| 21 | Isoamyl formate | 15.3 | 4.9 | 6.3 | 5.3 |
| Comp. Ex. 1 | Cyclopentanone | 17.9 | 11.9 | 5.2 | 58.6 |

(Chemically resistant protective coating)

[Example 25]

The dispersion of the fluorinated copolymer (concentration of ETFE 2: 5 mass%) was obtained in the same manner as in Example 13 except that a 100 mL pressure resistant reactor made of borosilicate glass was used, and 38.0 g of 2-heptanone as the solvent and 2.0 g of ETFE 2 were used. Using the obtained dispersion of microparticles of ETFE 2, a protective coating was applied to an aluminum plate. In the dispersion of microparticles of ETFE 2, an aluminum substrate was dipped, vertically pulled out at a speed of 40 mm/min and dried for 10 minutes in an oven at 200°C to obtain an aluminum substrate coated with ETFE 1 on both sides. The film thickness was measured by means of a non-contact optical thin film measuring apparatus and found to be 170 nm. A test piece having the protective coating applied was dipped in 1 N hydrochloric acid, whereby a change was observed. The results are shown in Table 6.

[Table 6]

| Dipping solution / Test piece | 1 N hydrochloric acid |
|---|---|
| Aluminum substrate (non-treated) | Corroded after one hour |
| Aluminum substrate + protective coating | No change observed after 3 hours |

As shown in Table 6, it was possible to remarkably improve the chemical resistance of the aluminum plate by coating it with the coating composition of the present invention.

INDUSTRIAL APPLICABILITY

According to the coating composition of the present invention, it is easy to form a coating film of the fluorinated copolymer i.e. ETFE having repeating units derived from ethylene and repeating units derived from tetrafluoroethylene, by coating, and the composition is suitable for an application for e.g. surface treatment where heat resistance, flame retardancy, chemical resistance, weather resistance, low friction property, low dielectric property, transparency, etc. are required.

The entire disclosure of Japanese Patent Application No. 2010-095255 filed on April 16, 2010 including specification, claims, drawings and summary is incorporated herein by reference in its entirety.

**Claims**

1. A coating composition comprising microparticles of a fluorinated copolymer having repeating units derived from ethylene and repeating units derived from tetrafluoroethylene, and a solvent capable of dissolving the fluorinated copolymer at a temperature of not higher than the melting point of the fluorinated copolymer, wherein the microparticles of the fluorinated copolymer are microparticles precipitated from a solution having the fluorinated copolymer dissolved in the solvent, and are dispersed in the solvent.

2. The coating composition according to Claim 1, wherein the solvent has a boiling point of at least 40°C and at most 210°C.

3. The coating composition according to Claim 1 or 2, wherein, of the solvent, the dissolution index (R) for the fluorinated copolymer, based on Hansen solubility parameters and represented by the following formula (1), is less than 25:

$$R=4\times(\delta d-15.7)^2+(\delta p-5.7)^2+(\delta h-4.3)^2 \qquad (1)$$

wherein $\delta d$, $\delta p$ and $\delta h$ represent the dispersion component, the polar component and the hydrogen bonding component, respectively, in Hansen solubility parameters, and their units are $(MPa)^{1/2}$, respectively.

4. The coating composition according to any one of Claims 1 to 3, wherein the proportion of repeating units derived from comonomers other than tetrafluoroethylene and ethylene constituting the fluorinated copolymer, is from 0.1 to 50 mol% in all monomer repeating units.

5. The coating composition according to any one of Claims 1 to 4, wherein the fluorinated copolymer is a fluorinated copolymer having at least one member selected from the group consisting of a carboxylic acid group, an acid anhydride group and a carboxylic halide group.

6. The coating composition according to any one of Claims 1 to 5, wherein the microparticles of the fluorinated copolymer have an average particle size within a range of from 0.005 to 2 $\mu$m as an average particle size measured by a small-angle X-ray scattering technique at 20°C.

7. A process for producing a coating composition, which comprises a step of dissolving a fluorinated copolymer having repeating units derived from ethylene and repeating units derived from tetrafluoroethylene, in a solvent capable of dissolving the fluorinated copolymer at a temperature of not higher than the melting point of the fluorinated copolymer, to form a solution, and a step of precipitating the fluorinated copolymer in the form of microparticles in the solvent in the solution, to convert the solution to a dispersion having the microparticles dispersed in the solvent.

8. The process for producing a coating composition according to Claim 7, wherein the dissolution is carried out at a temperature of at least 40°C and not higher than the melting point of the fluorinated copolymer, and the precipitation is carried out by cooling.

9. A process for forming a coating film, which comprises a composition-applying step of applying the coating composition as defined in any one of Claims 1 to 6 to a substrate to form a solvent-containing coating film, and a solvent-removing step of removing the solvent from the solvent-containing coating film to obtain a coating film containing no solvent.

10. The process for forming a coating film according to Claim 9, wherein in the composition-applying step, the application of the coating composition to the substrate is carried out at a temperature of lower than the temperature for dissolving the fluorinated copolymer in the solvent.

11. The process for forming a coating film according to Claim 9 or 10, wherein in the solvent-removing step, the removal of the solvent is carried out at a temperature of from 0 to 350°C.

Fig. 1

300000 : 1

100 nm

Fig. 2

24

Fig. 3

## INTERNATIONAL SEARCH REPORT

| | International application No. |
|---|---|
| | PCT/JP2010/073033 |

**A. CLASSIFICATION OF SUBJECT MATTER**
*C09D127/18*(2006.01)i, *C09D123/08*(2006.01)i

According to International Patent Classification (IPC) or to both national classification and IPC

**B. FIELDS SEARCHED**

Minimum documentation searched (classification system followed by classification symbols)
C09D1/00-10/00, C09D101/00-201/10

Documentation searched other than minimum documentation to the extent that such documents are included in the fields searched
Jitsuyo Shinan Koho        1922-1996    Jitsuyo Shinan Toroku Koho    1996-2011
Kokai Jitsuyo Shinan Koho  1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 61-111376 A (Mitsubishi Petrochemical Co., Ltd.), 29 May 1986 (29.05.1986), claims; page 2, upper left column, lines 11 to 16 (Family: none) | 1-11 |
| Y | JP 2002-256217 A (Asahi Glass Co., Ltd.), 11 September 2002 (11.09.2002), claims; paragraphs [0022] to [0032] (Family: none) | 1-11 |
| Y | JP 2002-020676 A (Asahi Glass Co., Ltd.), 23 January 2002 (23.01.2002), paragraph [0004] (Family: none) | 1-11 |

☒ Further documents are listed in the continuation of Box C.          ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    09 March, 2011 (09.03.11) | Date of mailing of the international search report<br>    22 March, 2011 (22.03.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/073033 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 05-186603 A  (Nippon Shokubai Co., Ltd.), 27 July 1993 (27.07.1993), claims (Family: none) | 1-11 |
| Y | JP 11-049925 A  (Toyobo Co., Ltd.), 23 February 1999 (23.02.1999), claim 5; paragraphs [0013] to [0014] (Family: none) | 1-11 |
| Y | JP 11-061041 A  (Toshiba Silicone Co., Ltd.), 05 March 1999 (05.03.1999), paragraph [0009] (Family: none) | 1-11 |
| Y | JP 2007-112889 A  (Kansai Paint Co., Ltd.), 10 May 2007 (10.05.2007), paragraph [0019] (Family: none) | 1-11 |
| Y | JP 2007-138012 A  (Toyo Ink Manufacturing Co., Ltd.), 07 June 2007 (07.06.2007), paragraph [0022] (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2412960 A
- US 2448952 A
- US 2484483 A
- US 4933388 A
- JP 2004238405 A
- JP 2010095255 A